# EUROPEAN PATENT APPLICATION

(11) **EP 2 894 576 A1**
(43) Date of publication of application: **15.07.2015**
(21) Application number: 14197001.2
(22) Date of filing: 09.12.2014
(51) Int. Cl.: G06F 17/30

(54) **Server device, method for providing service thereof, display device, and display method thereof**

(30) Priority: 09.01.2014 KR 20140002962
(71) Applicant: Samsung Electronics Co., Ltd, Gyeonggi-do 443-742 (KR)
(72) Inventor: Jeong, A-rang, Gyeonggi-do (KR); Ko, Charm-han, Gyeonggi-do (KR)
(74) Representative: Appleyard Lees

(57) **Abstract**

A server device is provided, which includes a communicator configured to receive viewing log information from a display device; a storage configured to store content; and a controller configured to automatically extract a preference keyword based on the viewing log information, to select recommended content from the storage by searching the content that corresponds to the preference keyword, and to transmit information on the selected recommended content to the display device through the communicator.

## Description

### BACKGROUND

### 1. Field of the Invention

The present disclosure relates to a server device, a method for providing a service thereof, a display device, and a display method thereof. In particular, exemplary embodiments relate to a server device that provides recommended content information, a method for providing a service thereof, a display device, and a display method thereof.

### 2. Description of the Related Art

Storing and providing a large number of pieces of content have been developed using various display devices. Further, with the development of storage technology to store content, a large amount of content can be stored in one device. Further, content can be provided from an external device through the Internet or other communication networks, in addition to a storage space of the device itself.

As the number of pieces of content that can be used through one display device has increased, it becomes difficult for a user to find and use only desired content among the large number of pieces of content. Thus, there is an increasing demand for only receiving desired content.

In response to this demand, a service to recommend content to a user has been developed in a related art. However, the service of the related art has a problem that the service indiscriminately recommends content. Thus, the recommended content using the service of the related art does not accurately reflect individual user commands. Further, in contrast to the related art, a user should receive the content passively in a state where the content is limited to recommendation standards determined by a service provider.

### SUMMARY

According to the present invention there is provided an apparatus and method as set forth in the appended claims. Other features of the invention will be apparent from the dependent claims, and the description which follows.

The present disclosure has been made to address at least the above problems and/or disadvantages and to provide at least the advantages described below. Accordingly, an aspect of the present disclosure provides a server device that provides recommended content information to meet a user taste.

According to an aspect of the exemplary embodiments, a server device includes a communicator configured to receive viewing log information from a display device; a storage configured to store content; and a controller configured to automatically extract a preference keyword based on the viewing log information, to select recommended content from the storage by searching the content that corresponds to the preference keyword, and to transmit information on the selected recommended content to the display device through the communicator.

In response to a plurality of preference keywords being extracted, the controller may be further configured to generate a keyword list that includes the plurality of preference keywords to store the generated keyword list in the storage, and the keyword list may be generated such that the keyword list is capable of being updated.

In response to a keyword being input from a user, the controller may be further configured to select the input keyword as the preference keyword and add the selected input keyword to the keyword list.

The controller may be configured to automatically generate an event keyword that corresponds to an event and add the event keyword to the keyword list.

The keyword list may include the preference keyword, the event keyword, and content recommendation period information for the event.

The controller may be further configured to transmit the keyword list to the display device, and in response to the keyword list being edited in the display device, receive information on the edited keyword list from the display device, and update the keyword list stored in the storage.

According to another aspect of the exemplary embodiments, a display device includes a storage configured to store viewing log information which is generated in response to the display device being viewed; a communicator configured to transmit the viewing log information to a server device, and in response to recommended content being searched in the server device according to a preference keyword extracted on a basis of the viewing log information, the communicator may be configured to receive information on the recommended content; a display configured to display the information on the recommended content; and a controller configured to request, in response to the recommended content being selected, the selected recommended content from the server device for downloading the selected recommended content.

The controller may be further configured to display, in response to a keyword list that includes the preference keyword being transmitted from the server device, a user interface (UI) for editing the keyword list on the display device, and in response to the keyword list being edited through the UI, the controller may be further configured to transmit the edited keyword list information to the server device.

The UI may include at least one of the preference keyword extracted on the basis of the viewing log information, the preference keyword input by a user, an event keyword generated on the basis of an event, a recommendation period, a deletion menu provided for each keyword, and a correction menu provided for each keyword.

According to still another aspect of the exemplary embodiments, a method for providing a service of a server device includes receiving viewing log information from a display device; automatically extracting a preference keyword based on the viewing log information; selecting recommended content by searching content which corresponds to the preference keyword from pre-stored content; and transmitting information on the selected recommended content to the display device.

The method for providing a service according to the aspect of the present disclosure may further include generating, in response to a plurality of preference keywords being extracted, a keyword list which includes the plurality of preference keywords, wherein the keyword list may be generated such that the keyword list is capable of being updated.

The generating the keyword list may include selecting, in response to a keyword being input from a user, the input keyword as the preference keyword and adding the selected input keyword to the keyword list.

The generating the keyword list may include automatically generating an event keyword that corresponds to an event and adding the event keyword to the keyword list.

The keyword list may include the preference keyword, the event keyword, and content recommendation period information for the event.

The generating the keyword list may include transmitting the keyword list to the display device, and in response to the keyword list being edited in the display device, receiving information on the edited keyword list from the display device, and updating the keyword list stored in the storage.

According to still another aspect of the exemplary embodiments, a display method of a display device includes transmitting viewing log information to a server device which is generated through viewing the display device; receiving, in response to recommended content being searched in the server device according to a preference keyword extracted on a basis of the viewing log information, information on the recommended content; displaying the information on the recommended content; and requesting, in response to the recommended content being selected, the selected recommended content from the server device to download the selected recommended content.

The displaying may include displaying, in response to a keyword list which includes the preference keyword being transmitted from the server device, a user interface (UI) for editing the keyword list on the display device, and in response to the keyword list being edited through the UI, transmitting the edited keyword list information to the server device.

The UI may include at least one of the preference keyword extracted on the basis of the viewing log information, the preference keyword input by a user, an event keyword generated on a basis of an event, a recommendation period, a deletion menu provided for each keyword, and a correction menu provided for each keyword.

According to yet another aspect of the exemplary embodiments, a display method of a display device includes transmitting an input keyword to a server device which is input through a keyword setting user interface (UI) window output on the display device; receiving, in response to recommended content being searched in the server device according to the input keyword, information on the recommended content, displaying the information on the recommended content, and requesting, in response to the recommended content being selected, the selected recommended content from the server device to download the selected recommended content.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram explaining a method for providing a service of a display device of a server device according to an embodiment of the present disclosure;
FIG. 2 is a block diagram illustrating the configuration of a server device according to an embodiment of the present disclosure;
FIG. 3 is a diagram illustrating the configuration of a controller of a server device according to another embodiment of the present disclosure;
FIG. 4 is a diagram illustrating the configuration of a storage of a server device according to another embodiment of the present disclosure;
FIG. 5 is a flowchart illustrating a method for providing a service of a server device according to an embodiment of the present disclosure;
FIGS. 6 and 7 are diagrams illustrating a series of procedures to be performed to provide a service of a server device according to various embodiments of the present disclosure;
FIG. 8 is a block diagram illustrating the configuration of a display device according to an embodiment of the present disclosure;
FIGS. 9 to 11 are views illustrating UI screens displayed on a display device according to an embodiment of the present disclosure; and
FIG. 12 is a flowchart illustrating a display method of a display device according to an embodiment of the present disclosure.

### DETAILED DESCRIPTION OF THE EXEMPLARY EMBODIMENTS

Hereinafter, embodiments of the present disclosure are described in detail with reference to the accompanying drawings.

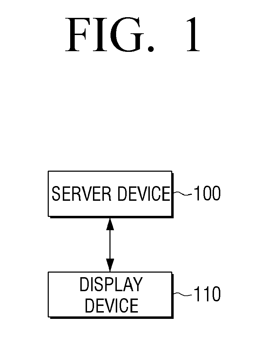

FIG. 1 is a diagram explaining a method for providing a service of a display device of a server device according to an embodiment of the present disclosure.

Referring to FIG. 1, a server device 100 is connected to a display device 110 in a wireless or wired communication method to provide a recommended content information providing service to the display device 110.

The display device 110 can be implemented by a digital TV or an IPTV that can receive and output broadcasting signals. However, the exemplary embodiments are not limited thereto. The display device 110 may be implemented by any device that can receive various kinds of broadcasting signals, such as a ground wave broadcasting signal, a cable broadcasting signal, a satellite broadcasting signal, and an Internet broadcasting signal. For example, the display device 110 may be implemented by a portable phone, a portable music player (PMP), an MP3 player, or a PC.

The server device 100 may be a server device that is operated by a broadcaster that directly transmits content to the display device 110, or a device that is separated from a broadcaster and provides information on recommended content. In particular, the server device 100 may register a preference keyword in various methods, select recommended content by searching content that corresponds to the registered keyword, and provide information on the selected recommended content to the display device 110. Accordingly, the server device 100 can recommend content to meet a user taste.

In an embodiment, the server device 100 may receive content viewing log information from the display device 110, and automatically extract and register the preference keyword based on the received viewing log information. The preference keyword may be based on the content viewing log information, or may be extracted on the basis of various databases, such as content search logs, viewing rates, and VOD popularity data.

According to another embodiment related to preference keyword registration, the server device 100 may register a keyword that is directly input by a user in a text form as the preference keyword.

According to still another embodiment, the server device 100 may automatically generate an event keyword that corresponds to an event and register the generated event keyword as the preference keyword. In this case, the event may be an event that is issued in respective fields, such as politics, society, economy, and sports. For example, the event may be a sports event, such as "World Cup" or "Olympics". Information on a specific event may be manually input to the server device 100 by a service provider of the server device 100 or may be automatically input using databases of various kinds of news media.

According to the above-described various embodiments, if the preference keyword is registered in the server device 100, the server device 100 may generate information on the recommended content based on the preference keyword to provide the information to the display device 110. Hereinafter, the operation of the server device 100 will be described in more detail.

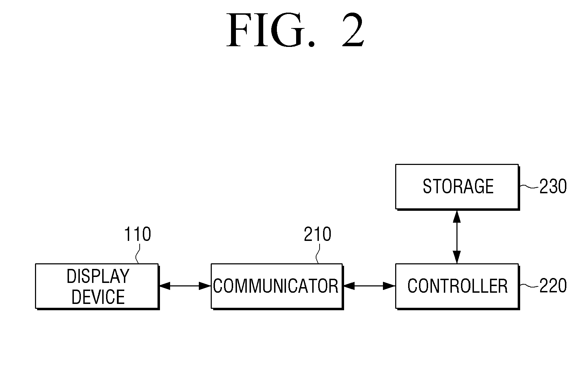

FIG. 2 is a block diagram illustrating the configuration of a server device 100 according to an embodiment of the present disclosure. Referring to FIG. 2, the server device 100 includes a communicator 210, a controller 220, and a storage 230.

The communicator 210 is a configuration that can send and receive various kinds of data with an external device, and may receive viewing log information from the display device 110. In particular, the communicator 210 may send and receive various kinds of information with the display device 110 through a wired, wireless, or wired/wireless communication interface. For example, the communicator 210 may communicate with the display device 110 using connections through Ethernet, local area network (LAN), Wi-Fi, wireless LAN, 3G or 4G communication environments provided by communication service providers, Bluetooth, or universal serial bus (USB) port. As described above, the communicator 210 may receive not only the viewing log information but also content search logs, viewing rate data, and VOD popularity data from various external devices or servers. The received data is provided to the controller 220. The controller 220 may extract the preference keyword based on the received data. Further, the communicator 210 may transmit information on the recommended content that is selected by the controller 220 to the display device 110. The generation of the recommended content information through the controller 220 will be described later.

The storage 230 is a constituent element for storing various kinds of programs or data that are used in the server device 100. In particular, the storage 230 may store content, and the content is various kinds of data including multimedia data, such as broadcasting programs and VOD, that can be reproduced. After a part of the stored content that corresponds to the preference keyword is selected as the recommended content, recommended content information may be provided to the display device 110.

Further, a keyword list that includes a plurality of preference keywords may be stored in the storage 230 for each user. In an embodiment, since the server device 100 manages the keyword list of an individual TV using the unique ID of each device (TV DUID), and the keyword list is stored in the storage 230 for each display device 110, the service that is provided by the server device 100 makes it possible to perform customized management of the keyword list.

The controller 220 may control the whole operation of the server device 100. In particular, the controller 220 is a configuration which automatically extracts the preference keyword based on the viewing log information received through the communicator 210, selects the recommended content by searching the content that corresponds to the extracted preference keyword from the storage 230, and transmits information on the selected recommended content to the display device 110 through the communicator 210.

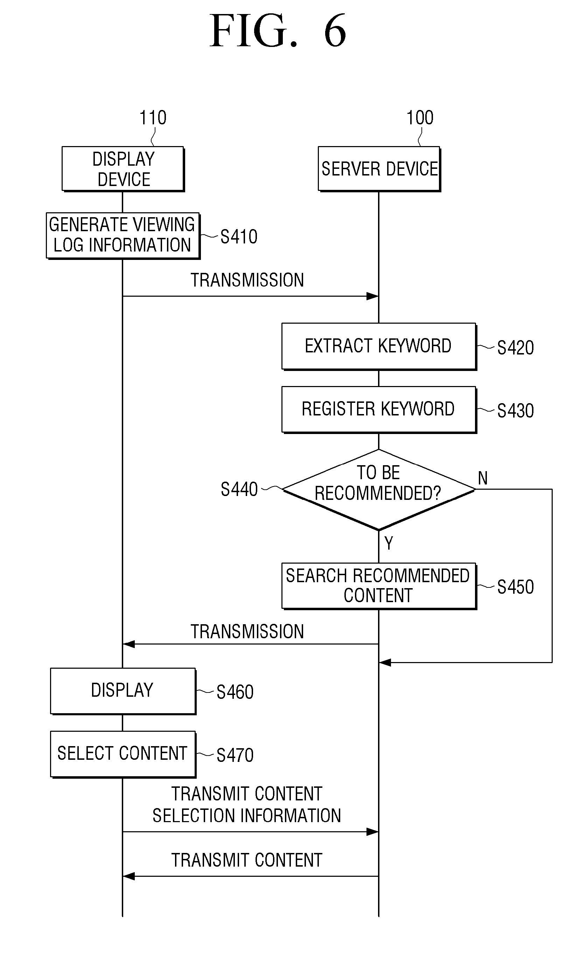

The viewing log information that is received through the communicator 210 may be information that is generated based on video content information (e.g., EPG information). A digital TV may store information on content that a user previously viewed for each date. Therefore, the user may reuse the viewed content any time. In this case, viewing history information stored in the display device may be the viewing log information for extracting the keyword of the controller 220. Further, in order to secure a large database for keyword extraction, the controller 220 may generate the viewing log information through addition of data to the received viewing history information. For example, the controller 220 may generate the viewing log information through an addition of additional information of viewing program genres, program production companies, program characters using EPG information. Based on the received or generated viewing log information, the controller may automatically extract the preference keyword. This will be described in more detail with reference to FIG. 6.

If a plurality of preference keywords are extracted, the controller 220 may generate a keyword list including a plurality of preference keywords and store the generated keyword list in the storage 230. As described above, the keyword list may be stored for each user. A user may edit the keyword list, and the controller 220 may update the edited keyword list to store the updated keyword list. In particular, the keyword list may include not only a preference keyword, but also an event keyword and content recommendation period information for each event. The event keyword is a keyword that is related to an event issued in respective fields, such as politics, society, economy, and sports. For example, the event may be a word, such as "World Cup" or "Olympics". According to another embodiment of the present disclosure, the controller 220 may automatically generate the event keyword that corresponds to the event and add the generated event keyword to the keyword list.

As described above, the keyword list may be updated on the basis of the keyword that is automatically extracted by the controller 220. In another embodiment, if the keyword is input by a user, the controller 220 may select the input keyword as the preference keyword and add the selected keyword to the keyword list. In other words, the controller 220 may add the keyword that is directly input by the user in a text form through the user interface (UI) of the display device 110 to the keyword list as the preference keyword.

Further, the keyword list may include a content recommendation period information for each event, and the content recommendation period information is information that is generated when a user inputs a period in which the user desires to get recommendation of content that corresponds to a specific keyword. In other words, the content recommendation period information is matched with the keyword to be stored in the storage 230, and according to the stored information, the controller 220 recommends the content related to the keyword to the user only in the corresponding period. For example, if the user sets "World Cup" as the keyword and sets a period measured from June 01, 2014 to June 30, 2014 as the content recommendation period, the controller 220 provides content information related to the keyword "World Cup" to the display device 110 only in the period from June 01, 2014 to June 30, 2014.

The controller 220 controls the whole operation of a user terminal device using various kinds of programs and data stored in the storage 230. The controller 220 may be composed of various types of system on chips (SoC).

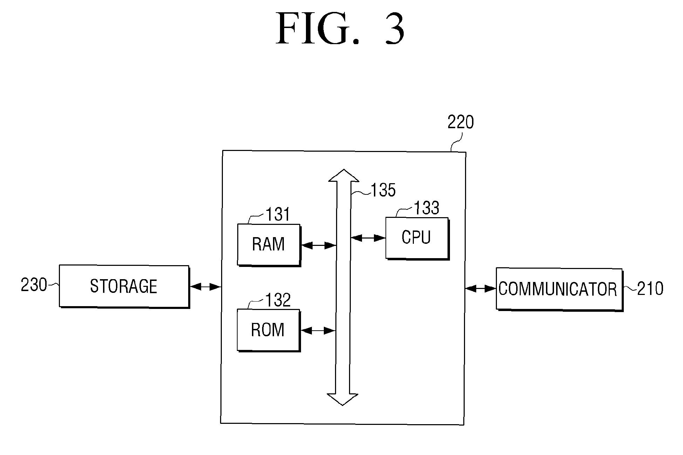

FIG. 3 is a block diagram illustrating the exemplary configuration of a controller 220.

Referring to FIG. 3, the controller 220 includes a RAM 131, a ROM 132, a CPU 133, a graphic processing unit (GPU) 134, and a bus 135. The RAM 131, the ROM 132, the CPU 133, and the GPU 134 may be connected to each other through the bus 135. The CPU 133 accesses the storage 230 and performs booting using an operating system (OS)_ stored in the storage 230. Further, the CPU 133 performs various operations using various kinds of programs, content, and data stored in the storage 230.

A command set for booting the server device 100 is stored in the ROM 132. If a turn-on command is input and a power is supplied, the CPU 133 copies the OS stored in the storage 230 into the RAM 131 according to a command stored in the ROM 132 and boots the system by executing the OS. If the booting is completed, the CPU 133 copies various kinds of programs stored in the storage 230 into the RAM 131 and performs various kinds of operations by executing the programs copied into the RAM 131.

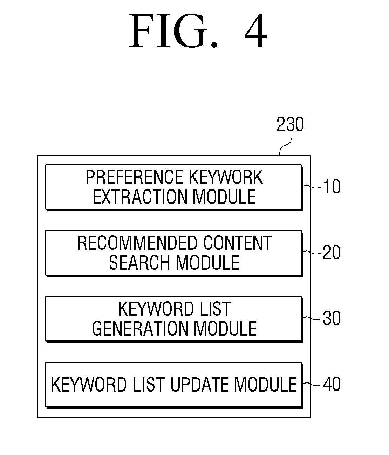

Various pieces of software and data may be stored in the storage 230. FIG. 4 is a diagram illustrating the software configuration of a storage 230 according to an embodiment of the present disclosure.

Referring to FIG. 4, the storage 230 stores a preference keyword extraction module 10, a recommended content search module 20, a keyword list generation module 30, and a keyword list update module 40. These modules may be implemented by software to perform a preference keyword extraction function, a recommended content search function, a keyword list generation function, and a keyword list update function. The controller 220 may perform the corresponding function by executing the software stored in the storage 230.

In particular, the CPU 133 may copy the preference keyword extraction module 10, the recommended content search module 20, the keyword list generation module 30, and the keyword list update module 40 into the RAM 131 to selectively execute the modules. Accordingly, the CPU 133 may automatically extract the preference keyword based on the viewing log information, and search the content that corresponds to the preference keyword from the storage to select the recommended content. Further, the CPU 133 may transmit information on the selected recommended content to the display device through the communicator. Further, the CPU 133 may occasionally or periodically update the keyword list through execution of the keyword list update module 40.

As described above, the respective control modules may be implemented by software stored in the storage 230 or may be separately implemented through hardware.

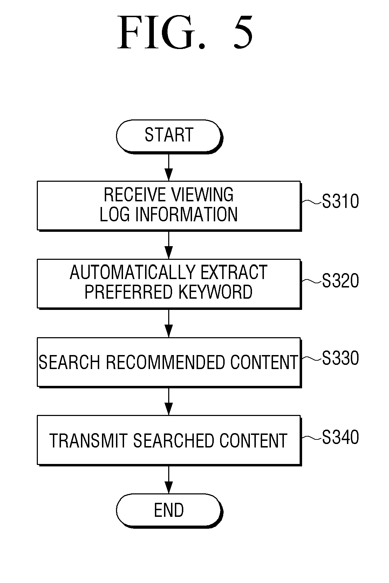

The operation of the server device 100 has been described for each constituent element of the server device 100. Hereinafter, a method for providing a service of the server device 100 will be described with reference to the flowchart of FIG. 5.

Referring to FIG. 5, viewing log information is first received from a display device (S310). Then, based on the received viewing log information, a preference keyword is automatically extracted (S320), and content that corresponds to the preference keyword is searched from pre-stored content to select a recommended content (S330). Here, the pre-stored content may be content stored in a server of a broadcaster if the service providing of the server device is directly performed through the broadcaster, or may be content supplied through the broadcaster to be pre-stored. After the recommended content is selected from the pre-stored content, information on the selected recommended content is transmitted to the display device.

In addition to an embodiment in which the steps of FIG. 5 are provided, various steps as described above through FIGS. 1 to 4 may be added or supplemented to the steps of FIG. 5. According to various embodiments, the method for providing a service of the server device according to the present disclosure may be provided. Since the various embodiments have been described, the duplicate description thereof will be omitted.

FIG. 6 is a diagram illustrating a series of procedures to be performed to provide a service of the server device according to an embodiment of the present disclosure.

Referring to FIG. 6, viewing log information is generated by a display device 110 (S410), and the generated viewing log information is transmitted to a server device 100. Although FIG. 6 illustrates that the viewing log information is generated by the display device 110, it may be directly generated by the server device 100 based on various kinds of data received through the display device 110. Since the corresponding embodiment has been described, duplicate description thereof will be omitted.

Next, a keyword is extracted by the server device 100 based on the transmitted viewing log information (S420). The keyword extraction operation will now be described in detail. The viewing log information may include various kinds of information, such as a program title, genre information of a program, performer information, broadcasting channel information, broadcasting time zone information, and broadcasting time information. The preference keyword may be extracted on the basis of the viewing log information. According to an embodiment of the present disclosure, a keyword database may be stored in the storage of the server device 100. The keyword database may include a keyword pool, for example, such as dramas, soap operas, sitcoms, entertainments, current events, cartoons, music, news, horrors, and comics. According to the frequency of matching the viewing log information, a specific word may be detected from the keyword database several times. The controller may determine frequency priority according to the detection frequency, and extract the preference keyword through a selection of words corresponding to the top priority, for example, the priority of 3%.

The extracted preference keyword is registered and stored in the storage of the server device 100 (S430), and it is determined whether to search the recommended content with the stored preference keyword. For example, if a preset event occurs, such as arrival of a preset time period, reception of a recommendation request from a user, or transmission of a recommendation command from a server, a search for the recommended content may be performed (S450).

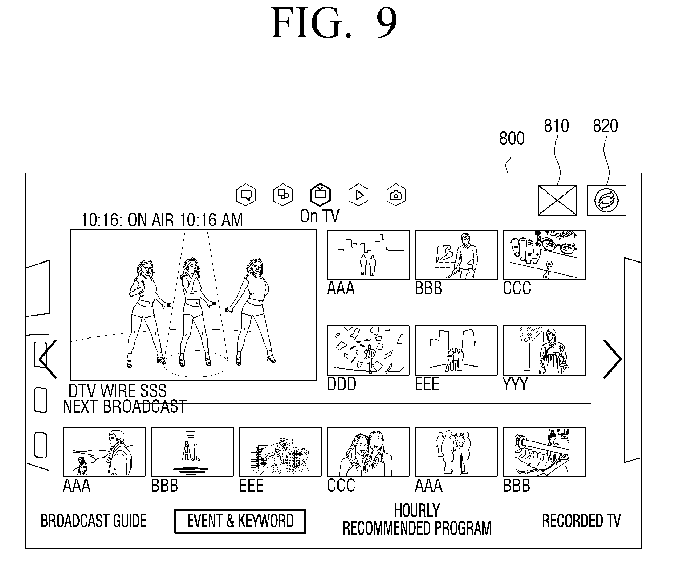

The recommended content information for the searched content is transmitted to the display device 110 to be displayed on the display device 110 (S460). In particular, information on the recommended content is listed and displayed in the form of an icon. The displayed screen will be described in more detail with reference to FIG. 9.

If a user selects desired content to be viewed from a displayed content list (S470), the display device 110 transmits content selection information to the server device 100. The content selection information includes a command to request the selected recommended content. In accordance with such a command, the server device 100 may transmit the content to the display device 110 based on the transmitted content selection information, and the display device 110 may download the selected recommended content.

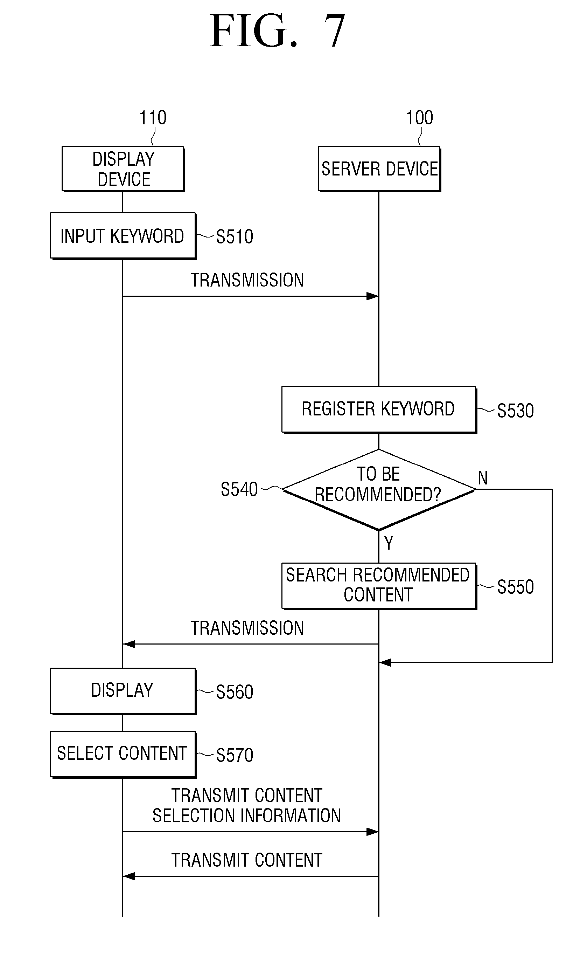

FIG. 7 is a diagram illustrating a series of procedures to be performed to provide a service of the server device according to another embodiment of the present disclosure.

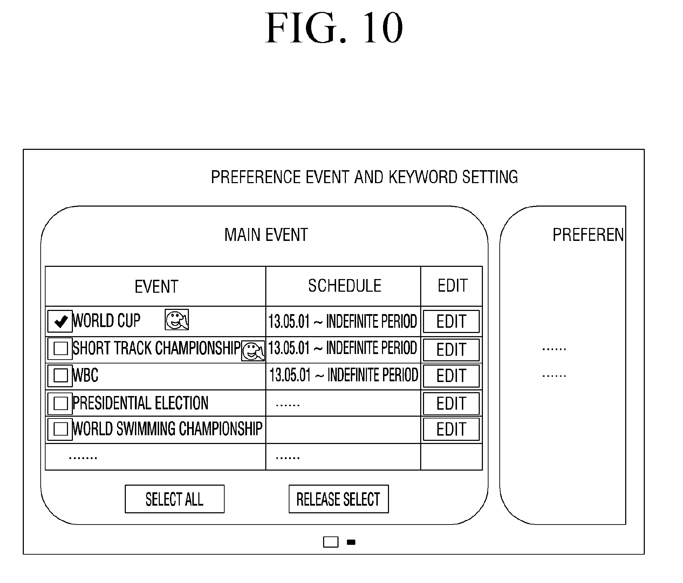

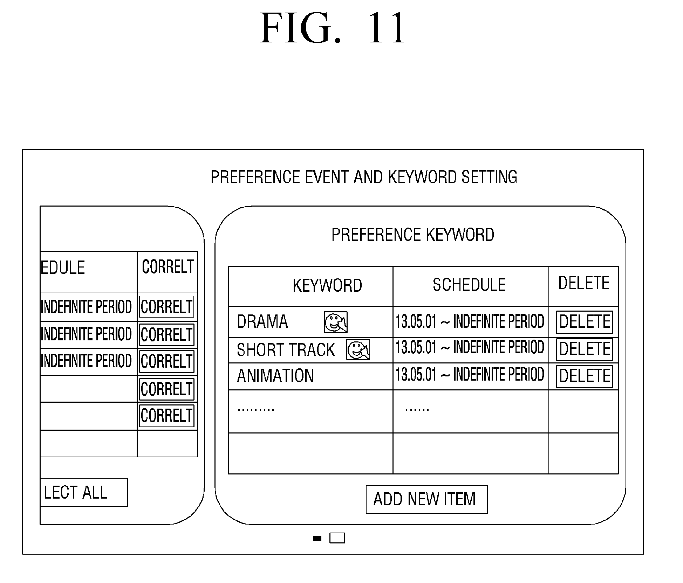

Referring to FIG. 7, a user first inputs a keyword through an inputter of the display device 110 (S510). In particular, the user may input the keyword through a keyword setting UI window that is output on the display of the display device 110. The keyword setting UI window will be described in more detail with reference to FIGS. 10 and 11.

The input keyword is transmitted to the server device 100 and is registered as the preference keyword. Since the subsequent series of steps are the same as those described above with reference to FIG. 6, duplicate description thereof will be omitted.

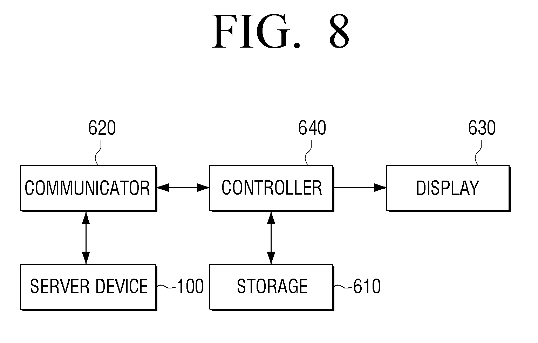

The server device and the method for providing a service of the server device according to various embodiments of the present disclosure have been described. The display device that is connected to the server device by wire or wirelessly to receive content recommendation service from the server device will be described with reference to FIGS. 8 to 11.

FIG. 8 is a block diagram illustrating the configuration of a display device 110 according to an embodiment of the present disclosure.

Referring to FIG. 8, the display device 110 includes a storage 610, a communicator 620, and a display 630. The display device 110 may be implemented by a digital TV or an IPTV that can receive and output broadcasting signals, but is not limited thereto. The display device 110 may be implemented by any device that can receive various kinds of broadcasting signals, such as a ground wave broadcasting signal, a cable broadcasting signal, a satellite broadcasting signal, and an Internet broadcasting signal. For example, the display device 110 may be implemented by a portable phone, a PMP, an MP3 player, or a PC.

The storage 610 is a constituent element for storing various kinds of programs or data that are used in the display device 110. In particular, the storage 610 is a configuration that stores viewing log information generated by the use of the display device 110.

The communicator 620 is a configuration that can send and receive various kinds of data with an external device. In particular, the communicator 620 is a configuration that transmits viewing log information stored in the storage 610 to the server device 100, and if recommended content is searched in the server device 100 according to the preference keyword that is extracted on the basis of the transmitted viewing log information, the communicator 620 receives information on the searched recommended content. The communicator 620 may communicate with the server device 100 by wire or wirelessly through a local area network (LAN), Wi-Fi, wireless LAN, 3G or 4G communication environments provided by communication service providers, or Bluetooth.

The display 630 is a constituent element for displaying a screen that includes at least one object. The screen means an image frame that is provided by the display device 110 through the display 630. In particular, the screen may include a home screen, an icon screen, a list screen, an application execution screen, a web browser screen, and a content reproduction screen. Further, the object is various kinds of shapes that are displayed in the screen, such as an icon, text, photograph, or widget. In particular, the display 630 displays information on the recommended content that is received through the communicator 620. An example of a screen on which content information is displayed is illustrated in FIG. 9.

FIG. 9 is a view illustrating an example of a screen that is displayed on the display 630. Referring to FIG. 9, information on the recommended content that is received through the communicator 620 is displayed on the screen 800. In particular, the recommended content is shown in the form of an icon that can be selected.

According to an embodiment of the present disclosure, the screen 800 includes a recommended program delete icon 810 and a recommended program refresh icon 820. If the recommended program delete icon 810 is selected, the controller 640 may control the display 630 to display a UI screen for deleting a program of which recommendation is not desired among the recommended programs. The deleted program is not displayed on the screen 800, and the controller 640 may include the deleted program in a recommendation exclusion list so that the same genre or the same program as the deleted program is not recommended in future. On the other hand, the display 630 may update and display a number of newly recommended programs which correspond to a same number as the deleted programs.

If the program refresh icon 820 is selected, a newly recommended program list is displayed on the screen 800. According to an embodiment of the present disclosure, the server device 100 recommends a number of programs which is five times larger than the number of recommended programs exposed to the screen 800 to transmit the recommended programs to the display device 110, and a user selects the program refresh icon 820 to receive sufficient recommendation of programs.

If an icon "event & keyword" included in the screen 800 is selected, a UI window for editing the keyword list as illustrated in FIG. 11 may be displayed on the display 630. According to another embodiment, the display 630 may display a notification window for guiding a keyword input on the screen 800. In this case, the screen 800 may display a recommended program list as shown in FIG. 9 or a program image being reproduced. In particular, if event information is received from the server device 100, the notification window for guiding the keyword input may be displayed. For example, the notification window may include a wording "World Cup Season! Will you register it as a preference event?". If the wording is selected, a UI window for editing the keyword list may be displayed on the display 630. The UI window for editing the keyword list will be described in detail with reference to FIGS. 10 and 11.

On the other hand, if the recommended content is selected on the basis of the information on the recommended content that is displayed on the display 630, the controller 640 requests the selected recommended content from the server device 100 and receives the downloaded recommended content. In another embodiment, the display device 110 may receive the keyword list that includes the preference keyword from the server device 100. Since the keyword list has been described in detail, duplicate explanation thereof will be omitted. If the keyword list is transmitted, the controller displays a UI for editing the keyword list on the display 630. Once the keyword list is edited in the displayed UI, the controller 640 transmits the edited keyword list information to the server device 100. The server device 100 can update the keyword list based on the received edited keyword list information.

FIGS. 10 and 11 are views illustrating UI windows for editing the keyword list that is displayed on the display 630 according to an embodiment of the present disclosure. In particular, FIG. 10 illustrates a UI window that includes main events, and FIG. 11 illustrates a UI window that includes preference keywords. The keywords that correspond to main events and the preference keywords are a same kind, and stored in the same storage in the server device 100 to be managed. For user interface convenience, they may be displayed in a divided manner, as illustrated in FIGS. 10 and 11.

Referring to FIGS. 10 and 11, the UI window for editing the keyword list may include at least one of a preference keyword extracted on the basis of viewing log information, a preference keyword input by a user, an event keyword generated on the basis of an event, a recommended period, a delete menu provided for each keyword, and a correct menu provided for each keyword. The user can edit the keyword list by performing registration release of a keyword that is automatically registered through the UI window, setting of the recommended period, or direct input of the keyword.

In an embodiment, a figure for indicating that the keyword is automatically recommended may be displayed beside the automatically registered keyword rather than the keyword that is directly input by the user. Information on the edited keyword list that is generated through the above-described addition of the keyword is transmitted to the server device 100, and the controller 220 of the server device 100 may update the keyword list according to the transmitted edited keyword list information to store the updated keyword list in the storage 230.

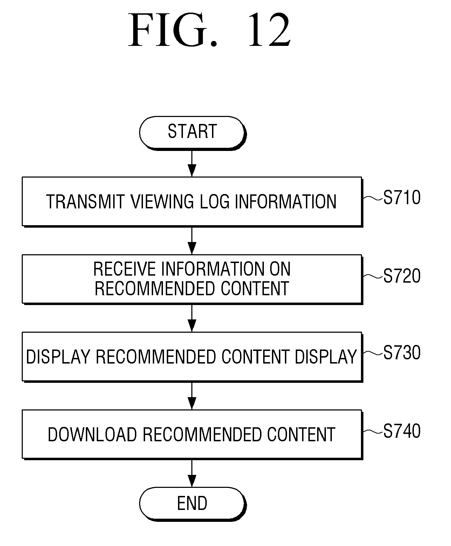

The operation of the display device 110 has been described for each constituent element of the display device 110. Hereinafter, a display method of the display device 110 will be described through the flowchart of FIG. 12.

FIG. 12 is a flowchart illustrating a display method of a display device according to an embodiment of the present disclosure.

Referring to FIG. 12, viewing log information is first transmitted (S710). Then, if recommended content is searched in a server device 100 according to a preference keyword that is extracted from the server device 100 based on the viewing log information, information on the received recommended content is received (S720). Then, the information on the received recommended content is displayed (S730). If the recommended content is selected by a user, the selected recommended content is requested from the server device 100 to download the requested recommended content (S740).

In addition to an embodiment in which the steps described above are provided, various steps described in FIGS. 8 to 11 may be added or supplemented to the steps of FIG. 12. According to various embodiments that add or supplement as described above, the method for providing a service of the server device according to the present disclosure may be provided. Since the various embodiments have been described, duplicate description thereof will be omitted.

The method for providing a service of the server device and the display method of the display device according to various embodiments described above may be coded by software and stored in a non-transitory readable medium. The non-transitory readable medium may be mounted and used in various devices.

The non-transitory computer readable medium is a device-readable medium which does not store data for a short time, such as a register, a cache, and a memory, but semi-permanently stores the data. Specifically, the non-transitory readable medium may be a CD, a DVD, a hard disk, a Blu-ray disk, a USB, a memory card, or a ROM.

While the present disclosure has been shown and described with reference to certain embodiments thereof, it will be understood by those skilled in the art that various changes in form and detail may be made therein without departing from the spirit and scope of the present disclosure, as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A server device comprising:
a communicator configured to receive viewing log information from a display device;
a storage configured to store content; and
a controller configured to automatically extract a preference keyword based on the viewing log information, to select recommended content from the storage by searching the content that corresponds to the preference keyword, and to transmit information on the selected recommended content to the display device through the communicator.

2. The server device as claimed in claim 1, wherein in response to a plurality of preference keywords being extracted, the controller is further configured to generate a keyword list that includes the plurality of preference keywords to store the generated keyword list in the storage, and
wherein the keyword list is generated such that the keyword list is capable of being updated.

3. The server device as claimed in claim 2, wherein in response to a keyword being input from a user, the controller is further configured to select the input keyword as the preference keyword and add the selected input keyword to the keyword list.

4. The server device as claimed in claim 2, wherein the controller is further configured to automatically generate an event keyword that corresponds to an event and add the event keyword to the keyword list.

5. The server device as claimed in claim 4, wherein the keyword list includes the preference keyword, the event keyword, and content recommendation period information for the event.

6. The server device as claimed in claim 2, wherein the controller is further configured to transmit the keyword list to the display device, and in response to the keyword list being edited in the display device, receive information on the edited keyword list from the display device, and update the keyword list stored in the storage.

7. A method for providing a service of a server device comprising:
receiving viewing log information from a display device;
automatically extracting a preference keyword based on the viewing log information;
selecting recommended content by searching content which corresponds to the preference keyword from pre-stored content; and
transmitting information on the selected recommended content to the display device.

8. The method as claimed in claim 7, further comprising:
generating, in response to a plurality of preference keywords being extracted, a keyword list which includes the plurality of preference keywords,
wherein the keyword list is generated such that the keyword list is capable of being updated.

9. The method as claimed in claim 8, wherein the generating the keyword list comprises selecting, in response to a keyword being input from a user, the input keyword as the preference keyword and adding the selected input keyword to the keyword list.

10. The method as claimed in claim 8, wherein the generating the keyword list comprises automatically generating an event keyword that corresponds to an event and adding the event keyword to the keyword list.

11. The method as claimed in claim 10, wherein the keyword list includes the preference keyword, the event keyword, and content recommendation period information for the event.

12. The method as claimed in claim 8, wherein the generating the keyword list comprises transmitting the keyword list to the display device, and in response to the keyword list being edited in the display device, receiving information on the edited keyword list from the display device, and updating the keyword list stored in the storage.
